# EUROPÄISCHE PATENTANMELDUNG

(11) **EP 2 924 960 A1**
(43) Veröffentlichungstag der Anmeldung: **30.09.2015**
(21) Anmeldenummer: 14162089.8
(22) Anmeldetag: 27.03.2014
(51) Int. Cl.: H04M 1/02, H02G 3/14, H02G 3/08

(54) **Verriegelung eines Funktionsträgers für ein modulares Montagesystem**

(71) Anmelder: GIRA GIERSIEPEN GmbH & Co. KG, 42477 Radevormwald (DE)
(72) Erfinder: Prescott, Oliver, 52072 Aachen (DE); Schimpfössl, Birgit, 52146 Würselen (DE); Klatt, Torsten, 52152 Simmerath (DE)
(74) Vertreter: Patentanwälte Dr. Solf & Zapf

(57) **Zusammenfassung**

Die vorliegende Erfindung betrifft ein Montagesystem (1) der Gebäudeinstallationstechnik zur Aufnahme von Funktionsmodulen, umfassend einen Rahmen (3) und einen in dem Rahmen (3) angeordneten plattenförmigen Funktionsträger (5) zur Aufnahme von Funktionsmodulen. Der Funktionsträger (5) ist durch Haltemittel mit dem Rahmen (3) lösbar verbunden. Die Haltemittel umfassen eine im Rahmen (3) zwischen einer Entriegelungsstellung und einer Verriegelungsstellung beweglich angeordnete Riegelstange (9) und am Umfang des Funktionsträgers (5) angeordnete Riegelnasen (11).

## Beschreibung

Die Erfindung betrifft gemäß dem Oberbegriff des Anspruchs 1 ein Montagesystem der Gebäudeinstallationstechnik zur Aufnahme von Funktionsmodulen, umfassend einen Rahmen und einen in dem Rahmen angeordneten plattenförmigen Funktionsträger zur Aufnahme von Funktionsmodulen, wobei der Funktionsträger durch Haltemittel mit dem Rahmen lösbar verbunden ist.

Derartige Montagesysteme werden zum Beispiel für die Montage von Türstationen bei Hauskommunikationssystemen verwendet.

Ein modulares Montagesystem ist zum Beispiel aus der DE 31 08 056 C2 bekannt. Das Dokument beschreibt eine Türsprechanlage mit einem Gehäuserahmen, wobei in dem Gehäuserahmen ein als Rasterahmen ausgebildeter Funktionsträger mit Öffnungen für Funktionsmodule über Scharniere schwenkbar und feststellbar verbunden ist. Der Funktionsträger wird mittels einer Gelenkverbindung und einem Verriegelungsschloss an dem Gehäuserahmen fixiert. Eine derartige Verbindung zwischen Gehäuserahmen und Funktionsträger ist aufwendig, wobei insbesondere Verblendleisten zur Abdeckung der Scharniere und des Verriegelungsschlosses verwendet werden müssen. Zudem kann der Funktionsträger nicht auf einfache Weise vollständig von dem Gehäuserahmen gelöst werden.

Der Erfindung liegt die Aufgabe zugrunde, Montagesysteme der Gebäudeinstallationstechnik zur Aufnahme von Funktionsmodulen zur Verfügung zu stellen, die eine einfache Herstellung der Montagesysteme und eine einfache Montage von Funktionsmodulen ermöglichen.

Die Aufgabe wird gemäß dem kennzeichnenden Teil des Anspruchs 1 dadurch gelöst, dass die Haltemittel eine im Rahmen zwischen einer Entriegelungsstellung und einer Verriegelungsstellung beweglich angeordnete Riegelstange und am Umfang des Funktionsträgers angeordnete Riegelnasen umfassen. Insbesondere ist die Riegelstange in einer Nut des Rahmens geführt. Vorteilhafterweise weist die Riegelstange Aufnahmenuten zur Aufnahme oder Freigabe der Riegelnasen in der Entriegelungsstellung auf. Dies ermöglicht eine besonders einfache Befestigung des Funktionsträgers in dem Rahmen.

In einer Ausführungsform weist die Riegelstange ein Bedienelement mit einer Betätigungsausnehmung zum Verschieben der Riegelstange zwischen der Entriegelungsstellung und der Verriegelungsstellung auf. Vorteilhafterweise weist der Rahmen einen Betätigungskanal zum Betätigen des Bedienelementes im Bereich der Betätigungsausnehmung zwischen der Entriegelungsstellung und der Verriegelungsstellung auf. Dies ermöglicht eine unauffällige und besonders einfache Entriegelung mittels eines Entriegelungswerkzeugs.

In einer weiteren Ausführungsform besteht der Rahmen aus mehreren zusammengesetzten Teilrahmen, die mittels in den Endbereichen der jeweiligen Nuten der Teilrahmen eingesetzten Verbindungsmitteln miteinander verbunden sind. Dies ermöglicht eine einfache Herstellung der Rahmen und eine einfache Anpassung der Rahmen an verschiedene Größen der Funktionsträger mit unterschiedlicher Anzahl von Öffnungen für die Funktionsmodule.

In einer weiteren Ausführungsform weist der Auflageboden des Rahmens an der dem Funktionsträger zugewandten Seite eine umlaufende Dichtung auf. Insbesondere verlaufen die den Riegelnasen zugewandten Endkanten der Seitenwände der Aufnahmenuten jeweils schräg in einem spitzen Winkel zur Verschieberichtung der Riegelstange, so dass die Endkanten bei einem Verschieben der Riegelstange in die Verschlussstellung die Riegelnasen in Richtung des Auflagebodens beziehungsweise der Dichtung drücken. Dies ermöglicht eine besonders einfache Abdichtung zwischen Rahmen und Funktionsträger.

Weitere Ausführungsformen und Vorteile ergeben sich aus der folgenden Figurenbeschreibung und den Unteransprüchen.

Es zeigen:
- Fig. 1: eine dreidimensionale Ansicht einer Ausführungsform eines erfindungsgemäßen Montagesystems,
- Fig. 2a: einen vergrößerten Ausschnitt B einer Ecke des Montagesystems gemäß Fig. 1 in einer Entriegelungsstellung,
- Fig. 2b: einen vergrößerten Ausschnitt B des Montagesystems gemäß Fig. 1 in einer Verriegelungsstellung,
- Fig. 3a: einen Schnitt A-A des vergrößerten Ausschnitts B des Montagesystems in der Entriegelungsstellung gemäß der Fig. 2a,
- Fig. 3b: einen Schnitt A-A des vergrößerten Ausschnitts B des Montagesystems in der Verriegelungsstellung gemäß Fig. 2b,
- Fig. 4: eine dreidimensionale Ansicht einer Ausführungsform einer Riegelstange eines erfindungsgemäßen Montagesystems gemäß Fig. 1,
- Fig. 5: einen vergrößerten Ausschnitt C der Riegelstange gemäß Fig. 4 eines erfindungsgemäßen Montagesystems gemäß Fig. 1,
- Fig. 6: eine dreidimensionale Ansicht einer Ausführungsform eines Eckverbinders eines erfindungsgemäßen Montagesystems gemäß Fig. 1.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

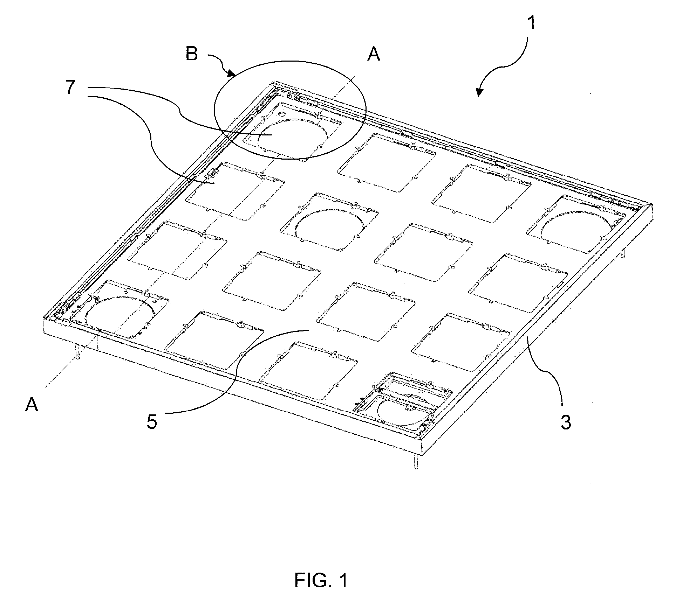

Fig. 1 zeigt eine dreidimensionale Ansicht eines erfindungsgemäßen Montagesystems 1 der Gebäudeinstallationstechnik zur Aufnahme von nicht dargestellten Funktionsmodulen, wie zum Beispiel Taster-, Lautsprecher-, Mikrophon- oder Anzeigemodule, insbesondere für eine Türstation eines Hauskommunikationssystems. Das Montagesystem umfasst einen insbesondere rechteckig ausgebildeten Rahmen 3 und einen in dem Rahmen 3 angeordneten plattenförmigen Funktionsträger 5 zur Aufnahme der nicht dargestellten Funktionsmodule. In einer alternativen Ausführungsform können auch mehrere Funktionsträger 5 nebeneinander und/oder untereinander in dem Rahmen 3 angeordnet sein. Der Rahmen 3 ist insbesondere als ein Strangpressgehäuse ausgebildet. Der Funktionsträger 5 umfasst Modulöffnungen 7, die insbesondere in einem bestimmten Rastermaß angeordnet sind und zur Aufnahme und Anordnung der Funktionsmodule dienen. Der Funktionsträger 5 ist durch Haltemittel mit dem Rahmen 3 lösbar verbunden. Dazu ermöglichen die Haltemittel insbesondere eine Entriegelungsstellung, bei der der Funktionsträger 5 in den Rahmen 3 eingesetzt werden beziehungsweise aus dem Rahmen 3 herausgenommen werden kann, und eine Verriegelungsstellung, bei der der Funktionsträger 5 in dem Rahmen 3 befestigt, insbesondere formschlüssig befestigt ist. Dies ermöglicht, die Funktionsmodule auf dem Funktionsträger 5 im nicht eingesetzten Zustand außerhalb des Rahmens 3 vorzumontieren. Danach können dann alle Funktionsmodule gleichzeitig mittels des Funktionsträgers 5 in den Rahmen 3 eingesetzt und befestigt werden.

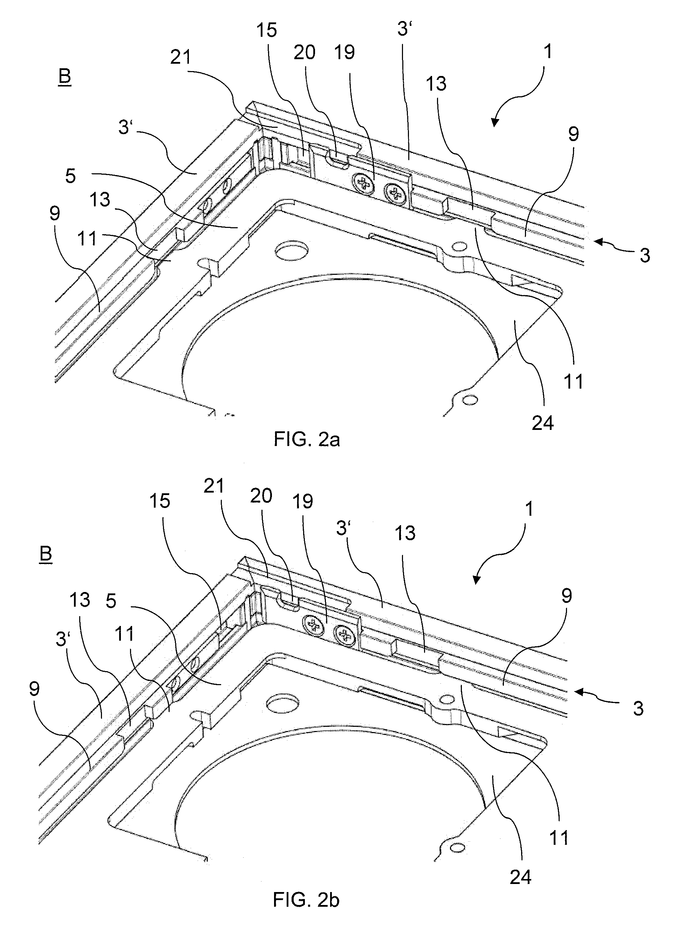

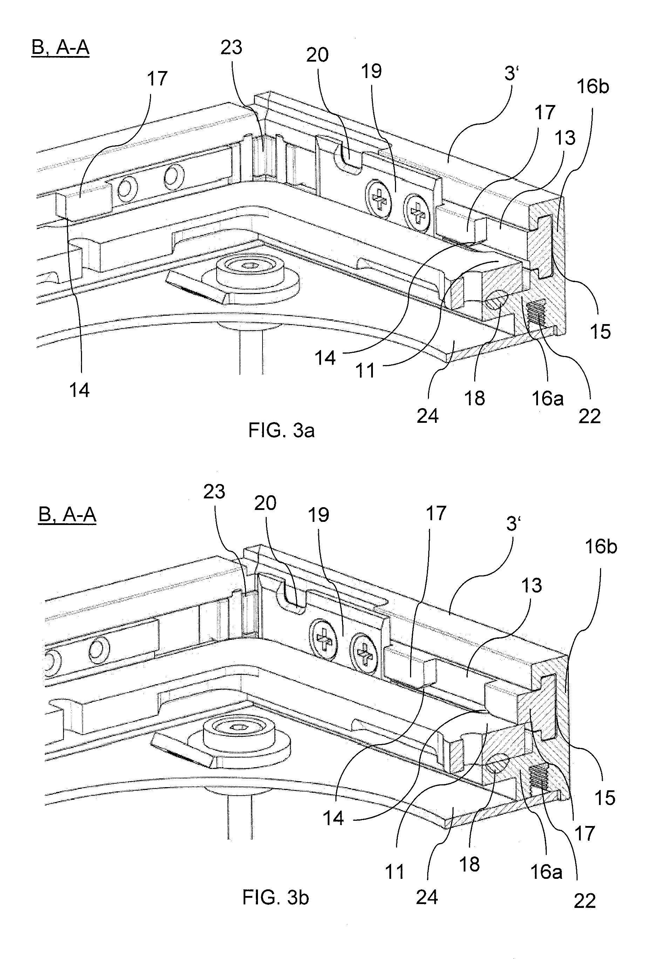

Fig. 2a und 2b zeigen einen vergrößerten Ausschnitt B des erfindungsgemäßen Montagesystems 1 gemäß Fig.1. Fig. 3a und 3b zeigen einen Schnitt des Ausschnitts gemäß Fig. 2a und 2b entlang der Schnittlinie A-A gemäß Fig. 1. Fig. 2a, 3a und Fig. 2b, 3b zeigen die Haltemittel in den unterschiedlichen Stellungen der Entriegelungsstellung gemäß Fig. 2a und 3a und der Verriegelungsstellung gemäß Fig. 2b und 3b. Die Haltemittel umfassen eine im Rahmen 3 zwischen der Entriegelungsstellung und der Verriegelungsstellung beweglich angeordnete Riegelstange 9 und am Umfang des Funktionsträgers 5 angeordnete Riegelnasen 11. Die Riegelstange 9 ist insbesondere aus einem glasfaserverstärktem Duroplast oder aus einem Thermoplast insbesondere mittels Spitzgussverfahren oder Strangpressverfahren hergestellt. Die Riegelstange 9 weist Aufnahmenuten 13 zur Aufnahme oder Freigabe der Riegelnasen 11 in der Entriegelungsstellung auf. Die Riegelstange 9 ist insbesondere in einer am Innenumfang des Rahmens 3 verlaufenden Nut 15 verschiebbar angeordnet. Der Rahmen umfasst insbesondere zwei senkrecht zueinander angeordnete umlaufende Schenkelstege. Der erste Schenkelsteg bildet insbesondere einen Auflageboden 16a für den Funktionsträger 5, und der zweite Schenkelsteg 16b weist die Nut 15 für die Riegelstange 9 auf. Insbesondere ist die Nut 15 des zweiten Schenkelstegs 16b des Rahmens 3 als T-förmige Nut ausgebildet. Die Riegelstange 9 weist insbesondere entsprechend zur Nut 15 einen T-förmigen Querschnitt auf.

Der Rahmen 3 und/oder der Funktionsträger 5 sind insbesondere derart mit nicht dargestellten Zentriermitteln ausgebildet und sind derart dimensioniert, dass der Funktionsträger 5 in dem Rahmen 3 in Richtungen senkrecht zur Einlegerichtung des Funktionsträgers 5 zentriert angeordnet ist.

In einer vorteilhaften Ausgestaltung weist der Rahmen 3 an seiner dem Funktionsträger 5 abgewandten Seite einen Schraubkanal 22 auf. Der Schraubkanal 22 dient insbesondere zur Befestigung eines Gehäusebodens 24. Der Rahmen 3 wird insbesondere mittels des Gehäusebodens 24 oder mittels nicht dargestellter Befestigungsmittel zum Beispiel an einer Hauswand befestigt.

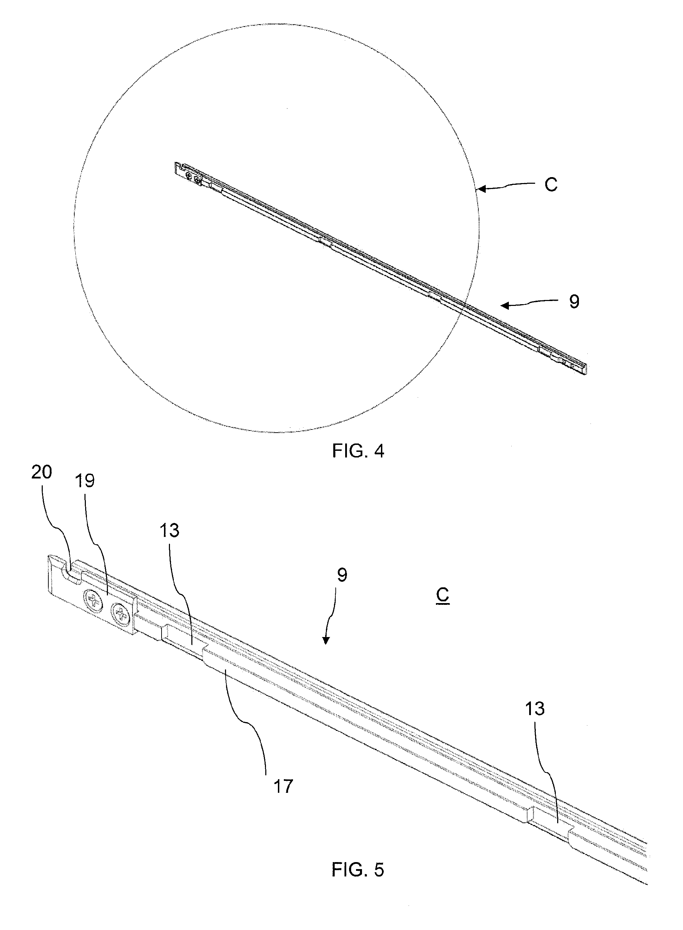

Fig. 4 und Fig. 5 zeigen die unmontierte Riegelstange 9. Die Riegelstange 9 weist insbesondere mehrere Aufnahmenuten 13 auf, die über die Länge der Riegelstange 9 entsprechend dem Raster des Funktionsträgers 5 verteilt sind. Vorteilhafterweise ragt die Riegelstange 9 mit einem parallel zum Auflageboden 16a verlaufenden Riegelsteg 17 aus der Nut 15 des Rahmens 3 heraus, so dass zwischen Riegelsteg 17 und Auflageboden 16a ein Aufnahmeraum zur Aufnahme für die Riegelnasen 11 des Funktionsträgers 5 gebildet wird. Dabei sind insbesondere die Aufnahmenuten 13 an dem Riegelsteg 17 der Riegelstange 9 angeordnet.

In einer vorteilhaften Ausführungsform weist der Auflageboden 16a an seiner dem Funktionsträger 5 zugewandten Seite eine umlaufende Dichtung 18 auf.

Wie in Fig. 3a und 3b ersichtlich, verlaufen vorteilhafterweise die den Riegelnasen 11 zugewandten Endkanten 14 der Seitenwände der Aufnahmenuten 13 jeweils schräg in einem spitzen Winkel zur Verschieberichtung der Riegelstange 9, so dass die Endkanten 14 die Riegelnasen 11 bei einem Verschieben der Riegelstange 9 in die Verschlussstellung in Richtung des Auflagebodens 16a drücken. Dadurch wird bei einer Verschiebung der Riegelstange 9 in die Verriegelungsstellung eine Dichtkraft zwischen dem Funktionsträger 5 und der Dichtung 18 beziehungsweise dem Auflageboden 16a aufgebracht.

Vorteilhafterweise weist der Rahmen 3 mindestens zwei Riegelstangen 9 auf, die an sich gegenüberliegenden Seiten des Rahmens 3 jeweils in einer Nut 15 angeordnet sind. Insbesondere ist an jeder Seite des Rahmens 3 eine Riegelstange 9 in einer Nut 15 angeordnet.

Die Riegelstange 9 weist ein Bedienelement 19 mit einer Betätigungsausnehmung 20 zum Verschieben der Riegelstange 9 zwischen der Entriegelungsstellung und der Verriegelungsstellung auf. Das Bedienelement 19 ist insbesondere an einem Ende der Riegelstange 9 angeordnet und insbesondere mit der Riegelstange 9 lösbar oder einteilig verbunden. Um das Bedienelement 19 auch bei einem eingesetzten und mit Funktionsmodulen bestückten Funktionsträger 5 betätigen zu können, weist der Rahmen 3 einen Betätigungskanal 21 zum Betätigen des Bedienelementes 19 im Bereich der Betätigungsausnehmung 20 zwischen der Entriegelungsstellung und der Verriegelungsstellung auf. Dadurch wird eine Betätigung mittels eines Hakenwerkzeugs durch den Betätigungskanal 21 ermöglicht. Insbesondere kann das Hakenwerkzeug hinter die Funktionsmodule greifen, so dass keine zusätzlichen Abdeckungen benötigt werden. Der Betätigungskanal 21 kann insbesondere auch derart am Rahmen 3 angeordnet sein, dass das Hakenwerkzeug zwischen zwei Funktionsmodule greift.

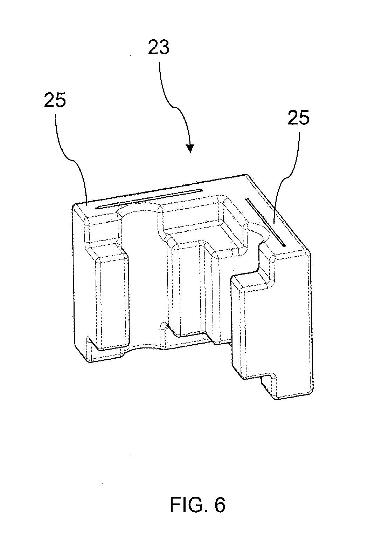

Der Rahmen 3 besteht insbesondere aus mehreren zusammengesetzten Teilrahmen 3', die mittels in den Endbereichen der jeweiligen Teilrahmen 3' eingesetzten Verbindungsmittel miteinander verbunden sind. Die Verbindungsmittel der Teilrahmen 3' sind insbesondere als Eckverbinder 23 ausgebildet. Die Eckverbinder 23 sind insbesondere mit den Teilrahmen verstiftet oder stoffschlüssig verbunden. Eine Ausführungsform eines Eckverbinders 23 ist in Fig. 6 dargestellt. Der Eckverbinder 23 umfasst zwei senkrecht zueinander abstehende Verbindungsschenkel 25. Die Verbindungsschenkel 25 sind jeweils mit einem Querschnitt zum Einführen in die Nut 15 ausgebildet. Insbesondere weisen sie einen T-förmigen Querschnitt auf. Die Eckverbinder 23 dienen insbesondere zur Positionierung und Ausrichtung der Teilrahmen 3'.

Ein derartiges Modulsystem ermöglicht unter anderem auch eine einfache Anpassung an unterschiedliche Einbaugegebenheiten mit unterschiedlicher Anzahl von Funktionsmodulen. So kann der Rahmen 3 lediglich durch unterschiedliche Längen der Teilrahmen 3' und der Riegelstange 9 an Funktionsträger 5 mit zum Beispiel eins, zwei, vier, sechs, acht, neun oder mehr Funktionsmodulöffnungen angepasst werden.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sind. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann.

## Patentansprüche

1. Montagesystem (1) der Gebäudeinstallationstechnik zur Aufnahme von Funktionsmodulen, umfassend einen Rahmen (3) und einen in dem Rahmen (3) angeordneten plattenförmigen Funktionsträger (5) zur Aufnahme von Funktionsmodulen, wobei der Funktionsträger (5) durch Haltemittel mit dem Rahmen (3) lösbar verbunden ist,
**dadurch gekennzeichnet, dass**
die Haltemittel eine im Rahmen (3) zwischen einer Entriegelungsstellung und einer Verriegelungsstellung beweglich angeordnete Riegelstange (9) und am Umfang des Funktionsträgers (5) angeordnete Riegelnasen (11) umfassen.

2. Montagesystem (1) nach Anspruch 1,
**dadurch gekennzeichnet, dass**
die Riegelstange (9) in einer Nut (15) des Rahmens (3) geführt ist.

3. Montagesystem (1) nach Anspruch 1 oder 2,
**dadurch gekennzeichnet, dass**
die Riegelstange (9) Aufnahmenuten (13) zur Aufnahme oder Freigabe der Riegelnasen (11) in der Entriegelungsstellung aufweist.

4. Montagesystem (1) nach einem der Ansprüche 1 bis 3,
**dadurch gekennzeichnet, dass**
der Rahmen (3) zwei senkrecht zueinander angeordnete umlaufende Schenkelstege (16a, 16b) umfasst.

5. Montagesystem (1) nach Anspruch 4,
**dadurch gekennzeichnet, dass**
der erste Schenkelsteg einen Auflageboden (16a) für den Funktionsträger (5) bildet und der zweite Schenkelsteg (16b) die Nut (15) für die Riegelstange (9) aufweist.

6. Montagesystem (1) nach einem der Ansprüche 2 bis 4,
**dadurch gekennzeichnet, dass**
die Nut (15) des zweiten Schenkelstegs (16b) des Rahmens (3) als eine T-förmige Nut (15) ausgebildet ist.

7. Montagesystem (1) nach einem der Ansprüche 1 bis 6,
**dadurch gekennzeichnet, dass**
die Riegelstange (9) einen T-förmigen Querschnitt aufweist.

8. Montagesystem (1) nach einem der Ansprüche 5 bis 7,
**dadurch gekennzeichnet, dass**
die Riegelstange (9) mit ihrem parallel zum Auflageboden (16a) verlaufenden Riegelsteg (17) aus der Nut (15) des Rahmens (3) herausragt, so dass zwischen dem Riegelsteg (17) und dem Auflageboden (16a) ein Aufnahmeraum für die Riegelnasen (11) gebildet wird.

9. Montagesystem (1) nach einem der Ansprüche 1 bis 8,
**dadurch gekennzeichnet, dass**
mindestens zwei Riegelstangen (9) an jeweils sich gegenüberliegenden Seiten des Rahmens (3) in der Nut (15) angeordnet sind.

10. Montagesystem (1) nach einem der Ansprüche 2 bis 9,
**dadurch gekennzeichnet, dass**
die Riegelstange (9) ein Bedienelement (19) mit einer Betätigungsausnehmung (20) zum Verschieben der Riegelstange (9) zwischen der Entriegelungsstellung und der Verriegelungsstellung aufweist.

11. Montagesystem (1) nach Anspruch 10,
**dadurch gekennzeichnet, dass**
der Rahmen (3) einen Betätigungskanal (21) zum Betätigen des Bedienelementes (19) im Bereich der Betätigungsausnehmung (20) zwischen der Entriegelungsstellung und der Verriegelungsstellung aufweist.

12. Montagesystem (1) nach einem der Ansprüche 4 bis 11,
**dadurch gekennzeichnet, dass**
der Auflageboden (16a) an der dem Funktionsträger (5) zugewandten Seite eine umlaufende Dichtung (18) aufweist.

13. Montagesystem (1) nach einem der Ansprüche 1 bis 12,
**dadurch gekennzeichnet, dass**
der Rahmen (3) aus mehreren zusammengesetzten Teilrahmen (3') besteht, die mittels in den Endbereichen der jeweiligen Nuten (15) der Teilrahmen (3') eingesetzten Verbindungsmittel miteinander verbunden sind.

14. Montagesystem nach Anspruch 13,
**dadurch gekennzeichnet, dass**
die Verbindungsmittel als Eckverbinder (23) mit zwei senkrecht zueinander abstehenden Verbindungsabschnitten (25) ausgebildet sind, wobei die Verbindungsabschnitte (25) jeweils mit einem Querschnitt zum Einführen in die Nut (15) ausgebildet sind.

15. Montagesystem nach einem der Ansprüche 3 bis 14,
**dadurch gekennzeichnet, dass**
die den Riegelnasen (11) zugewandten Endkanten (14) der Seitenwände der Aufnahmenuten (13) jeweils schräg in einem spitzen Winkel zur Verschieberichtung der Riegelstange (9) verlaufen, so dass die Endkanten (14) die Riegelnasen (11) bei einem Verschieben der Riegelstange (9) in die Verschlussstellung in Richtung des Auflagebodens (16a) drücken.
